# EUROPEAN PATENT APPLICATION

(11) **EP 1 501 249 A2**
(43) Date of publication of application: **26.01.2005**
(21) Application number: 04396052.5
(22) Date of filing: 22.07.2004
(51) Int. Cl.: H04L 12/58, H04Q 7/22

(54) **Method and device for multimedia message routing**

(30) Priority: 22.07.2003 FI 20031097
(71) Applicant: UniqMinds, Ltd., 00100 Helsinki (FI)
(72) Inventor: Lindström, Juha, 02600 Espoo (FR); Heiskanen, Jari, 02210 Espoo (FI)
(74) Representative: Laako, Tero Jussi

(57) **Abstract**

The invention relates to multimedia messaging (MMS) techniques and especially to a method and arrangement for multimedia messaging routing and communication techniques between initiator and responder end-points, as well as to a MMS router (300), software product (1010) and computer readable storage medium (1012) for implementing the routing. It is characterized for the present invention to communicate a MMS message via the MMS router (300), or interface means (300), locating between the initiator (301) and responder end-points (305). Especially communication information relating to notification messages and MMS message are communicated to the interface means (300) by the initiator (301) or responder end-point (305), whereupon information relating to the communication is modified for routing purposes corresponding to a current situation whether the MMS message and/or notification is to be communicated to the initiator (301) or responder (305) end-point from the MMS router (300).

## Description

### TECHNICAL FIELD OF THE INVENTION

The present invention relates to multimedia messaging (comprising notification and MMS messages) techniques and especially to a method and arrangement for multimedia messaging routing and communication techniques between initiator and responder end-points.

### BACKGROUND OF THE INVENTION

Multimedia Messaging Service (MMS) is specified by both 3GPP (3G Partnership Project) and WAP Forum and is now a universally accepted standard that allows messaging between different mobile users and/or between mobile users and the Internet (MMS Clients). MMS is sent or communicated via a MMSC (Multimedia Messaging Service Centre) and it is stored there until the receiver opens the message so MMS is viewed as a non-real-time delivery system. An MMS can of course be sent to an MMS enabled phone, but depending on an operator MMSC server the MMS can be sent to an email address as well. MMS media files are downloaded to the MMS client via GPRS (General Packet Radio Service), but also faster UMTS (Universal Mobile Telecommunication System) can be used as well. Like with SMS, MMS clients are provided with the possibility to request delivery report of the sent message as well as setting the message's maximum lifetime. The receiver of a MMS message is notified of the incoming message with an MMS notification using SMS as a bearer.

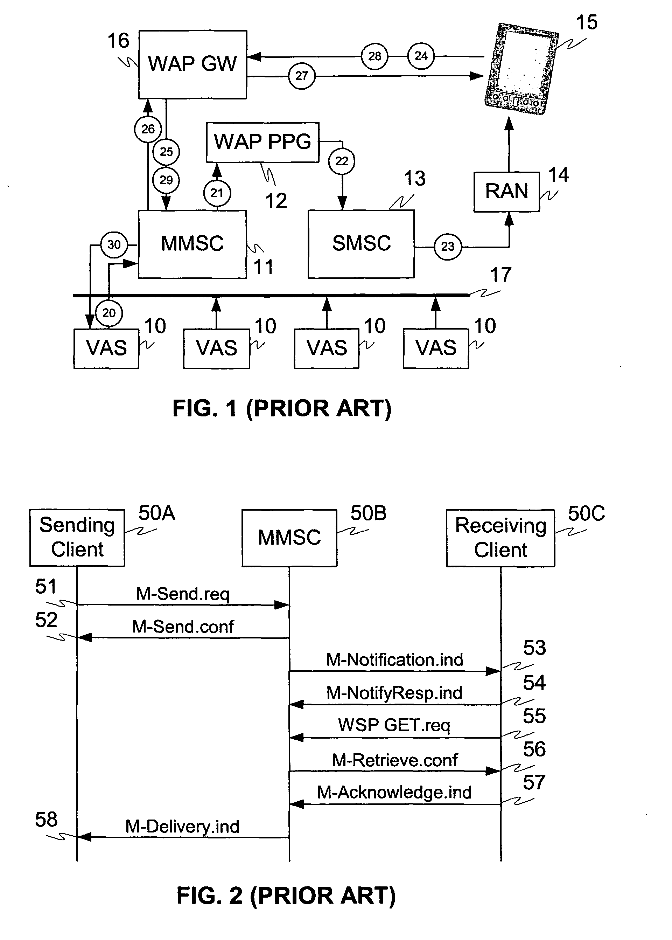

The current method and arrangement for MMS message flowing is illustrated in prior art Figure 1, where an external service application sends a MMS message to an end user or terminal or MMS client (mobile phone in this case). Figure 1 illustrates a typical MMS infrastructure consisting of several separate network components, where only MMSC is purely designed for multimedia messaging. Other components are also used for other kinds of tasks.

At first a value added service application 10 opens a connection over the used interface 17 and sends 20 a MMS message over supported protocol to the MMSC 11. In 3GPP specification this interface is defined as MM7 protocol but currently very few MMSC vendors support this protocol. Instead of using standard protocol there are various proprietary protocols like Nokia EAIF (External Application Interface) and Ericsson SMTP (Simple Mail Transfer Protocol).

MMSC 11 is responsible of store and forward functionality for multimedia messages (MMS). The main role of MMSC is to take care of the person-to-person messaging but it typically also provides external interface for application-to-person and person-to-application messaging. MMSC may also be responsible of the billing, content conversion, terminal management and some other features that are not always necessarily required from application-to-person or person-to-application messaging point of view.

After receiving the MMS message the MMSC 11 sends 21 the MMS notification (M-Notification.ind) to WAP Push Proxy Gateway (WAP PPG) 12 using Push Access Protocol (PAP), which is XML based protocol and uses Hypertext Transfer Protocol (HTTP) as a transport layer. WAP Push Proxy Gateway is responsible of sending WAP Push notifications via SMSC (Short Message Service Centre) to end-users and in step 22 WAP PPG 12 uses SMSC's external interface to deliver the binary mode short message (SMS) containing the M-Notification.ind to SMSC 13. In the future it can also use other ways to send the notification but currently the SMS is the only way in use.

SMSC is responsible of store and forward functionality for short messages (SMS). The main role of SMSC is to take care of the person-to-person messaging but it typically also provides external interface for application-to-person and person-to-application messaging. SMSC may also be responsible of the billing and some other features that are not always necessarily required from application-to-person or person-to-application messaging point of view, but SMSC is also used to send notifications to terminals of new MMS messages.

After receiving the SMS message containing the M-Notification.ind sent by WAP PPG, SMSC 13 stores the SMS message and tries to deliver 23 it over Radio Access Network (RAN) 14. In practice SMSC 13 uses SS7 protocol to check from the HLR (Home Location Registry) if the terminal 15 is online and if so it will send a notification as a SMS message to the SMSC 13 that will transfer the notification SMS message to the terminal 15. Radio Access Network (RAN) covers mobile switching centre, base station controller, base stations, home location registry and other possible GSM network components.

After the GPRS connection establishment between the terminal 15 and WAP Gateway (WAP GW) 16 the terminal 15 will open a connection 24 to the WAP GW 16 and make a WSP GET request over UDP (User Datagram Protocol) to the WAP GW 16. The request is pointed to the URL address and path mentioned in the MMS notification. This means that the message does not necessarily has to be located in the MMSC that is configured to the terminal.

The main functionality of WAP Gateway (WAP GW) is encoding and decoding WAP requests. WAP GW can also implement additional features like the billing, caching, cookie caching, content conversion, terminal management and some other features. From MMS messaging point of view the role of the WAP GW is typically just encoding and decoding and it needs only a subset of WAP stack to provide required functionality.

In step 25 the WAP GW 16 decodes the binary encoded WSP GET request and forwards the request over HTTP to the URL address mentioned in the MMS notification (to the MMSC 11 in this example). After this MMSC 11 sends 26 the corresponding MMS message as a response to the request to the WAP GW 16, which encodes the response to binary format and forwards 27 the content of MMS message to the terminal 15.

After receiving the content the terminal 15 uses the existing GPRS connection to send the delivery notification in WSP POST request to the WAP GW 16 in step 28. Next WAP GW 16 decodes the binary encoded WSP POST request and forwards 29 the request over HTTP to the MMSC 11. It should be noted that the notification is now sent to the MMSC address configured in the terminal 15 for that. At the end, when the delivery notification is received from the terminal 15, the MMSC 11 forwards 30 the delivery notification to the VAS application 10 over supported protocol, but only if the MMSC address configured in the terminal 15 is the address of the MMSC, from which the message was retrieved by the terminal 15. Otherwise the delivery notification message is received by a wrong MMSC (MMSC, which has not send the message) and thus the wrong MMSC cannot forward the delivery notification correctly.

Another example of typical MMS transactional message flow in WAP environment is still illustrated in prior art figure 2, where a sending client 50A sends M-Send.req to MMSC 50B in step 51 using the WAP POST method over a WAP session when sending a MMS message to a receiving client 50C. The message (M-Send.req) contains transaction identifier (ID), which is created and used by the sending client and it is unique within the send transaction only. After receiving the Send request (M-Send.req), MMSC 50B sends a response message (M-Send.conf) back to the sending client in step 52 indicating the status of the operation.

Next the MMSC 50B informs the receiving client 50C about the contents of the received MMS message by sending a M-Notification.ind in step 53, whereupon the receiving client 50C will confirm it by M-NotifyResp.ind in step 54. The purpose of the notification sent to the receiving client 50C is to allow the receiving client 50C to automatically fetch a message from the location indicated in the notification. M-Notification.ind includes also a transaction identifier created by the MMSC 50B and it is unique up to the following M-NotifyResp.ind only. If the receiving client 50C request deferred delivery with M-NotifyResp.ind, the MMSC 50B may create a new transaction identifier.

The receiving client 50C shall retrieve the MMS message from the MMSC 50B by sending a WSP GET to the MMSC 50B in step 55, whereupon the MMSC 50B will send M-Retrieve.conf as a response to the receiving client 50C in step 56. After receiving the MMS message the receiving client 50C sends M-Acknowledge.ind message to the MMSC 50B in step 57 confirming the delivery of the MMS message, if the address of MMSC configured in the terminal of the receiving client is the address of the corresponding MMSC 50B. Otherwise there is possibility that the receiving client sends delivery notification message to a wrong MMSC. After all the MMSC 50B sends or communicates delivery report (M-Delivery.ind) to the sending client 50A in step 58 when the originator has requested a delivery report and the recipient has not explicitly requested for denial of the report, but only if the MMSC address configured in the terminal of the receiving client is the address of the MMSC, from which the message was retrieved by it. If there are number of recipients there will be a separate delivery report from each recipient.

There are, however, some disadvantages in MMS messaging environments. The MMS messaging environment has mainly been build by using existing network that are also used for WAP browsing and because of that there are some functionality that is not necessarily required and that is making the MMS infrastructure more expensive and less optimal from capacity point of view. In addition some problems arise due to the increasing number of MMS messages, such as transfer speed will become slower. In addition MMSCs will become overloaded and jammed, which further induces the slower transfer speed.

Different kinds of solutions for faster MMS delivering are known from prior art such as transferring only some selected multimedia component(s) to the terminal (cf. patent document WO 01/33782, for example) or decreasing the quality of multimedia component(s). However, the solutions according to the prior art do not eliminate all existing problem. For example, loads of MMSCs is still at maximum and thus also the transfer speed of the messages is not increased. Moreover there arise problems if more than one MMSC is tried to use for delivering messages, because a receiving client can't confirm a delivery of a MMS message to the right MMSC, if the address of a MMSC configured to a terminal of the receiving client is not the address of the MMSC, from which the message was retrieved by the receiving client, and thus a sending client can't be sure that the MMS message has been delivered to the receiving client.

### SUMMARY OF THE INVENTION

The object of the invention is to alleviate MMS messaging load at a MMSC by a reliable and effective way and avoid effects of bottleneck as well as avoid vulnerability of the MMS messaging system and interruptions in the message communication traffic caused by software and/or hardware failures. The invention aims also to provide more capacity with relatively low investments so that the message handling and communicating capacity of a single server would be very high. Further the object of the invention is to make possible to add or remove the components used for communicating or delivering MMS messages in the MMS environment, as also to make possible to use numbers of MMS delivering components, such as MMSC, in the MMS network at the same time in an effective way, and also to ensure that the sender client will be sure that the message sent by it is delivered to the right receiving client, especially in an arrangement where number of MMS delivering component are used. When the sender client is sure about the delivering process, it can invoice the receiving client. Moreover the object of the invention is to simplify and accelerate the delivery systems.

The objects of the invention are fulfilled by a new method and component, MMS router, using the method, which can do load balancing effectively between multiple MMSC's or similar components and also be able to route delivery notifications correctly as well as MMS messages. The load balancing between multiple MMSC's done by MMS router according to the present invention is achieved by algorithm or static or dynamic rules in order to use appropriate MMSC. Effective routing of notifications, such as delivery notifications, as well as MMS messages is based on the inventive method to use any information in the MMS message and/or notification message communication for routing purposes, and to direct at least part of the information traffic flowing through said MMS router.

The invention relates to a method for multimedia messaging routing between an initiator end-point and a responder end-point, wherein when communicating a multimedia message (MMS message) via an interface means, where the interface means locates between the initiator and responder end-points, communication information relating to the MMS message and/or notification message is communicated to the interface means from the initiator or responder end-point, the method being characterized in that said interface means is a MMS router, and the method further comprises the following steps:
- said communication information is modified in order to suit for routing purposes and corresponding to a current situation whether the communication information is to be communicated to the initiator or responder end-point from the interface means in a such way that the modifying operation further comprises at least one of the following steps:
   - modifying a message ID in the communication information to include an identifier of an appropriate MMSC, where the MMS message to be delivered is stored,
   - modifying a notification message URL to point to the interface means, when the notification message is to be delivered from the initiator end-point to the responder end-point,
   - modifying a notification message URL to point to the initiator end-point, when the notification message is to be delivered from the responder end-point to the initiator end-point,
   - modifying a transaction ID to comprise address information of the corresponding initiator end-point, when the message is to be delivered from the initiator end-point to the responder end-point,
   - modifying a transaction ID to comprise address information of the interface means, when the message is to be delivered from the initiator end-point to the responder end-point, and
   - modifying a delivery notification message URL to point to the interface means, when the notification message is to be delivered from the responder end-point to the initiator end-point,
- and communicating the modified communication information to the appropriate end-point.

The invention further relates to an arrangement for multimedia messaging routing between an initiator end-point and a responder end-point, wherein when a multimedia message (MMS message) is being communicated via an interface means, where the interface means locates between the initiator and responder end-points, communication information relating to the MMS message and/or notification message is adapted to being communicated to the interface means from the initiator or responder end-point, the arrangement being characterized in that said interface means is a MMS router, and the arrangement is further:
- adapted to modify said communication information in order to suit for routing purposes and corresponding to a current situation whether the communication information is to be communicated to the initiator or responder end-point from the interface means in a such way that the arrangement is further adapted to carry out at least one of the following steps:
   - adapted to modify a message ID in the communication information to include an identifier of an appropriate MMSC, where the MMS message to be delivered is stored,
   - adapted to modify a notification message URL to point to the interface means, when the notification message is to be delivered from the initiator end-point to the responder end-point,
   - adapted to modify a notification message URL to point to the initiator end-point, when the notification message is to be delivered from the responder end-point to the initiator end-point,
   - adapted to modify a transaction ID to comprise address information of the corresponding initiator end-point, when the message is to be delivered from the initiator end-point to the responder end-point,
   - adapted to modify a transaction ID to comprise address information of the interface means, when the message is to be delivered from the initiator end-point to the responder end-point, and
   - adapted to modify a delivery notification message URL to point to the interface means, when the notification message is to be delivered from the responder end-point to the initiator end-point,
- and adapted to communicate the modified communication information to the appropriate end-point.

The invention further relates to a multimedia messaging router for multimedia messaging routing between an initiator end-point and a responder end-point, the multimedia messaging router being characterized in that communication information relating to the MMS message and/or notification message is adapted to being communicated to the MMS router from the initiator or responder end-point, and the MMS router is further:
- adapted to modify said communication information in order to suit for routing purposes and corresponding to a current situation whether the communication information is to be communicated to the initiator or responder end-point from the MMS router in a such way that the MMS router is further adapted to carry out at least one of the following steps:
   - adapted to modify a message ID in the communication information to include an identifier of an appropriate MMSC, where the MMS message to be delivered is stored,
   - adapted to modify a notification message URL to point to the MMS router, when the notification message is to be delivered from the initiator end-point to the responder end-point,
   - adapted to modify a notification message URL to point to the initiator end-point, when the notification message is to be delivered from the responder end-point to the initiator end-point,
   - adapted to modify a transaction ID to comprise address information of the corresponding initiator end-point, when the message is to be delivered from the initiator end-point to the responder end-point,
   - adapted to modify a transaction ID to comprise address information of the MMS router, when the message is to be delivered from the initiator end-point to the responder end-point, and
   - adapted to modify a delivery notification message URL to point to the MMS router, when the notification message is to be delivered from the responder end-point to the initiator end-point,
- and adapted to communicate the modified communication information to the appropriate end-point.

The invention further relates to a software product being characterized in that the software product comprises code components that, when loaded into a computer and executed, are adapted to cause the computer to operate according to the method of any of the method claims.

The invention further relates to a computer readable storage medium being characterized in that the computer readable storage medium comprises a software product mentioned above.

The following notions are used in this application:
- "Communication": means delivering of MMS messages and notifications (determined in the following), or any other messages relating to MMS messages and notifications between different end-points, such as person-to-person and especially application-to-person, in the MMS messaging environments. When using any information in the communication for routing purposes according to the invention, it is meant that any information, such as addresses and message ID's, are used either purely or after modifying. Communication itself may comprise MMS message or notification message, for example.
- "initiator": or initiator end-point is typically a sending client, such as a person or application, or MMSC or PEAKm™ component.
- "MMS router": may act as an interface means between MMSC and WAP PPG and between the MMSC and WAP GW components, for example, for routing MMS messages and notifications correctly. MMS router may also comprise functionality of conventional WAP PPG and WAP GW components, whereupon act as an interface means between MMSC and other end-point, such user terminal or SMSC. It should be also noted, that MMS messaging could be implemented also using HTTP protocol without WAP GW functionality or component, whereupon the MMS router can act as an interface means between MMSC and other end-point, such user terminal.
- "MMSC": term is used in this document for describing an intelligent component, which is responsible for storing and forwarding functionality for MMS messages. MMSC may act also as an initiator, but also as responder. When using term "MMSC" in this document, it may be meant also other similar components for doing necessary functions of typical MMSC component in view of the invention, such as PEAKm™ component or other, where the PEAKm™ is inventors own component.
- "Modifying": of communication information means, that communication information is modified, if necessary, in order to suit for routing purposes and corresponding to a current situation whether the communication information is to be communicated to the initiator or responder end-point from the interface means. In modifying operation a message ID, for example, may be modified by combining an identifier of appropriate MMSC (or identifier of any other appropriate component) into the message ID and communicate the modified message ID to the appropriate end-point. Modified communication information may comprise address information or virtual address information and identity information of the MMS message to be delivered from the initiator end-point to the responder end-point. It should be noted that in some cases there is no need to modify communication information (if communication information already exist in appropriate form), whereupon the modifying operation is null (zero operation) as a whole.
- "Notification": or notification message means message requests and delivery notifications of MMS messages generally, such as M-Send.req, M-Send.conf, M-Notification.ind, M-NotifyResp.ind, M-Retrieve.conf, M-Acknowledge.ind and M-Delivery.ind messages. Notification message is part of actual MMS message.
- "PEAKm": comprises essential functions of MMSC for delivering and storing MMS messages.
- "Receiving client": receives a MMS message from the sending client. Receiving client may act as a responder (end-point),
- "Responder": or responder end-point is typically a receiving client, such as a person or application, or MMSC or PEAKm component.
- "Sending client": sends a MMS message to the receiving client. Sending client may act as an initiator (end-point).

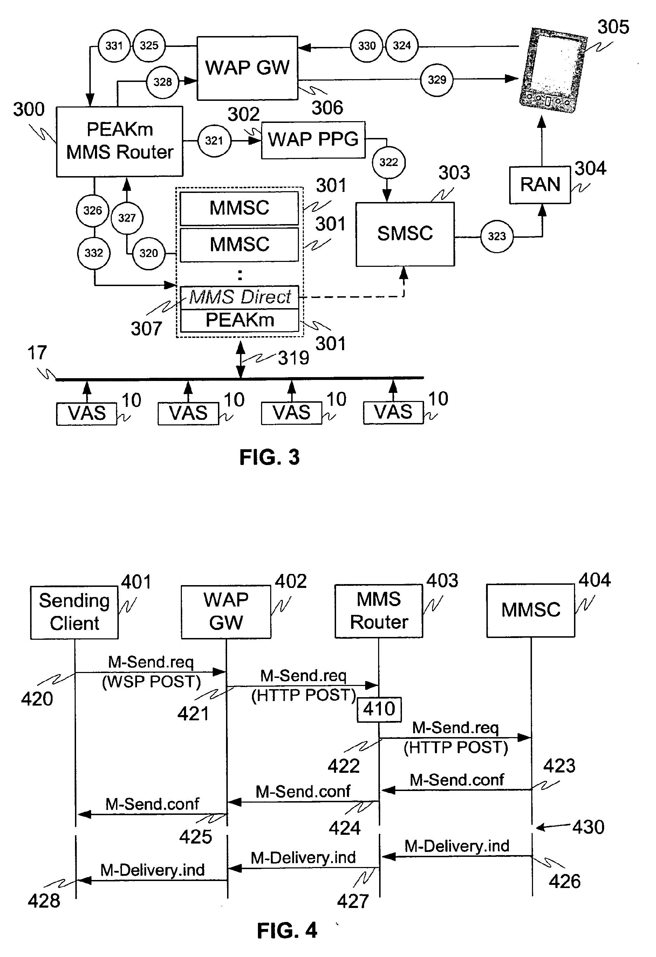

The invention makes the communicating of MMS messages and notifications, such as delivery notifications, as well as the MMS environment, much flexible, quicker and simpler than in the prior art. A special advantage of the invention is that there can be numbers of MMSC's or other components, such as PEAKm (described in more detail in description of Figure 3), for communicating MMS messages in the MMS environment instead of one at the same time and still notifications can be delivered correctly. Therefore also an effective load balancing between multiple MMSC's can be achieved according to the present invention. Also the communicating capability of the MMS messaging system can be increased in relating to the prior art. Especially the MMS router can help message traffic by operating between the MMSC and WAP PPG and between the MMSC and WAP GW functionalities (or between the MMSC and end-user, if WAP GW is not used).

Another special advantage of the invention is that the components for communicating MMS messages in the MMS environment can be added or removed so that the parties or end-points, such as sending or receiving clients, would not notice any interruptions or any anomalous in the MMS or notification message communication traffic. A further special advantage of the invention is that the MMS router can be implemented by so called black box implementation, whereupon the administration of the MMS router will be simple and therefore also the MMS router itself can be easily duplicated, triplicated etc in order to balance the MMS and notification message traffic more effectively. Thus serious interruptions in MMS or notification communication traffic caused by software and/or hardware failures will be minimized by the adaptability of the MMS network architecture according to the present invention. Therefore it's said that the arrangement according to the invention is stateless (components, especially MMS routers, can be added and/or removed without incurring any interruptions or other harmful effects to the communication traffic in the system).

Further special advantage of the invention is that the routing of the MMS messages and notifications messages between different parties or end-points can be made more convenient and flexible way than in prior art, and that the end-points can be sure that the messages are received by the right end-point, because according to the invention delivery notifications can be delivered and routed correctly to the corresponding sender end-point regardless of a MMS component, such as a MMSC component of different manufacturers, used for delivering the MMS message. The appropriate routing can be achieved by use of any information in the MMS message and/or notification message communication for routing purposes. The MMS router may, for example, make some conclusion of an appropriate end-point, to which the MMS message and/or notification message, such as delivery notification, has to be delivered based on the information of the communication relating to the current MMS messaging. This can be achieved, because MMSC's and other platforms may include information into the information of the communication, MMS message and/or notification, where the included information refers to the appropriate MMSC or other platform unambiguously.

Alternatively the MMS router may modify, if necessary, any information in the communication in order to suit better for current routing purposes and especially for routing purposes of delivery notifications and including the modified information back into the communication. The MMS router may modify the message ID, for example, by combining an identifier of its own and an identifier of an appropriate MMSC (or identifier of any other appropriate component) into the message ID and communicate the modified message ID to the appropriate end-point. Modified information may comprise advantageously at least address information or virtual address information and identity information of the MMS message to be delivered from the initiator end-point to the responder end-point.

Another further special advantage of the invention is that the complexity of the MMS network architecture of the prior art can be simplified and vulnerability decreased according to the present invention by removing the needless components and/or functionality (in the view of MMS messaging traffic) and integrating the necessary components and/or functionalities into the MMS router of the invention. Especially the necessary components and/or functionalities of the WAP PPG and WAP GW (if needed) are convenient to integrate into the MMS router according to the invention, whereupon the traditional WAP PPG and WAP GW components can be removed.

Furthermore the present invention makes possible to communicate so called group messages effectively, such as news destined typically for thousands or hundred of thousands receivers almost at the same time, because the MMS router of the invention can handle many thousands messages in second and because the needless components/functionalities delaying the MMS messaging traffic (or being as a bottleneck) in the MMS messaging environment mentioned above can be removed and also because only the advantageous functionalities of these components is used and especially because these functionalities can be integrated to the MMS router of the invention, whereupon there does not exist any delays due to transmission paths between components locating in different places in the MMS messaging environment. The present invention also allows a use of MMSCs of different manufacturers so that delivery notifications can still be delivered correctly to appropriate end-points. This is not possible according to the prior art solutions.

### BRIEF DESCRIPTION OF THE DRAWINGS

Next the invention will be described in greater detail with reference to exemplary embodiments in accordance with the accompanying drawings, in which
- Figure 1: illustrates a block diagram of a typical arrangement for network architecture and message flow according to the prior art,
- Figure 2: illustrates a flow diagram of a typical MMS transactional message flow in a WAP environment according to the prior art,
- Figure 3: illustrates a block diagram of an exemplary arrangement and method for a network architecture and message flow according to an advantageous embodiment of the present invention,
- Figure 4: illustrates a flow diagram of a send operation according to an advantageous embodiment of the present invention,
- Figure 5: illustrates a flow diagram of a routing and load balancing method between multiple MMSC's according to an advantageous embodiment of the present invention,
- Figure 6: illustrates a flow diagram of an immediate delivery operation according to an advantageous embodiment of the present invention,
- Figure 7: illustrates a flow diagram of a delayed delivery operation according to an advantageous embodiment of the present invention,
- Figure 8: illustrates an exemplary system where the present invention can be applied according to an advantageous embodiment of the present invention,
- Figure 9: illustrates another exemplary arrangement for a network architecture and message flow according to an advantageous embodiment of the present invention, and
- Figure 10: illustrates an exemplary MMS router, software product and computer readable storage medium according to an advantageous embodiment of the present invention.

### DETAILED DESCRIPTION

Figures 1 and 2 have been discussed in more detail above in connection with the prior art description.

Figure 3 illustrates a block diagram of an exemplary arrangement and method for a network architecture and message communication flow according to an advantageous embodiment of the present invention in immediate delivery operation, where in step 319 a MMS message to be communicated to the end-point terminal 305, M-Send.req and M-Send.conf messages are provided over the used interface 17 between a MMSC 301 or similar component, such as a PEAKm component 301, and value added service 10, like in an application-to-person communication. According to the invention the MMSC (or PEAKm) 301 is arranged to store the MMS message and compose and send the MMS notification (M-Notification.ind) to a MMS router 300 instead of WAP PPG in step 320.

The MMS router 300 may change or modify for example the URL reference to point to itself (to the MMS router 300), add a special routing ID to the path in the notification message in communication and communicate the modified notification (M-Notification.ind) to WAP PPG 302 in step 321. The special routing ID will tell later in which MMSC (or PEAKm) the MMS message is located. All MMSC's and other MMS platforms have a unique ID that can be used to route the delivery notifications and message requests correctly.

When receiving the notification message the WAP PPG 302 encodes the notification message into binary mode SMS message containing the M-Notification.ind and sends it to the SMSC 303 using SMSC's external interface in step 322. After this the SMSC stores the SMS message containing the M-Notification.ind and sends the message to the end-point terminal 305 over RAN 304 in step 323.

After the GPRS connection establishment between the terminal 305 and WAP Gateway (WAP GW) 306 the terminal 305 will open a connection to the WAP GW 306 and make a WSP GET request over UDP (User Datagram Protocol) to the WAP GW 306 in step 324 (in immediate delivery operation). The request is pointed to the URL address and path mentioned in the MMS notification, in other word to the MMS router 300 in this case. This means that the message does not necessarily has to be located in the MMSC that is configured to the terminal.

In step 325 the WAP GW 306 decodes the WSP GET request and forwards it over HTTP to the MMS router 300, which is pointed in the URL address of the WSP GET request. After this the MMS router 300 may change the URL reference in the WSP GET request back to MMSC address and communicate the request further to the corresponding MMSC 301 in step 326, so that MMSC 301 returns the corresponding MMS message (M-Retrieve.conf) to the MMS router 300 in step 327.

According to the exemplary embodiment of the invention, the MMS router 300 may now insert a MMS server specific prefix string into the transaction ID and forward the MMS message as a response to the request to the WAP GW 306 in step 328. The prefix inserted to the transaction ID may be later used to route the delivery notification (M-NotifyResp.ind) to the originating MMSC 301 or other MMS platform, such as PEAKm component, in order to avoid resend the MMS message. WAP GW 306 encodes the message and forwards it to the terminal 305 in step 329.

After receiving the message the terminal 305 sends the delivery notification (M-NotifyResp.ind) to the WAP GW 306 in step 330 that forwards it to the MMS router 300 in step 331. Now it should be noted that the terminal 305 sends the delivery notification to the MMS router (via WAP GW, if any) instead of a MMSC originally configured to the terminal, because the prefix inserted to the transaction ID in earlier step. Then the MMS router may forward 332 the delivery notification further to the originating MMSC 301 based on the transaction ID prefix that was inserted to the transaction ID earlier by the MMS router. Therefore, the MMSC 301 may further forward M-Delivery.ind message to the VAS application 10 over the supported protocol 17 correctly.

Especially it should be noted now that the MMS router 300 may use any information in the communication for routing purposes without doing any modification. The modification is done only if necessary or otherwise required. However, also in this case the network architecture and message communication flow may be similar than illustrated in figure 3. The MMS router 300 may, for example, make some conclusion of an appropriate end-point, to which the MMS message and/or notification message has to be delivered based on the original information of the communication relating to the current MMS messaging. This can be achieved, because MMSC's and other platforms may include information into the information of the communication, MMS message and/or notification, where the included information refers to the appropriate MMSC or other platform unambiguously.

Further it should be noted, that the invention may also comprise the PEAKm component 301 with a MMS Direct component and/or functionality 307, whereupon the MMS Direct 307 can send the M-Notification.ind message directly to the SMSC 303. In addition it should be noted, that the PEAKm may comprise convenient subset of the necessary functionality of the MMSC. Especially the PEAKm can be connected to mobile operator's different messaging centres provided by multiple vendors. Mobile services can be connected to the PEAKm platform through multiple interfaces. Further the PEAKm enables the dynamic management of mobile services, including the generation of real-time business statistics and other reports.

Figure 4 illustrates a flow diagram of a send operation and read-reply report communication between the sending client 401 and MMSC 404 according to an advantageous embodiment of the present invention, where the MMS router 403 operates between the MMSC 404 and WAP GW 402 (if WAP GW is used, otherwise between the MMSC and sending client) by doing load balancing. Send operation happens when the sending client sends a MMS message to other end-point, such as receiving client or to a service application. It should be noted that there can be numbers of MMSC's 404 according to the inventive feature of the present invention, but only one is shown in figure 4.

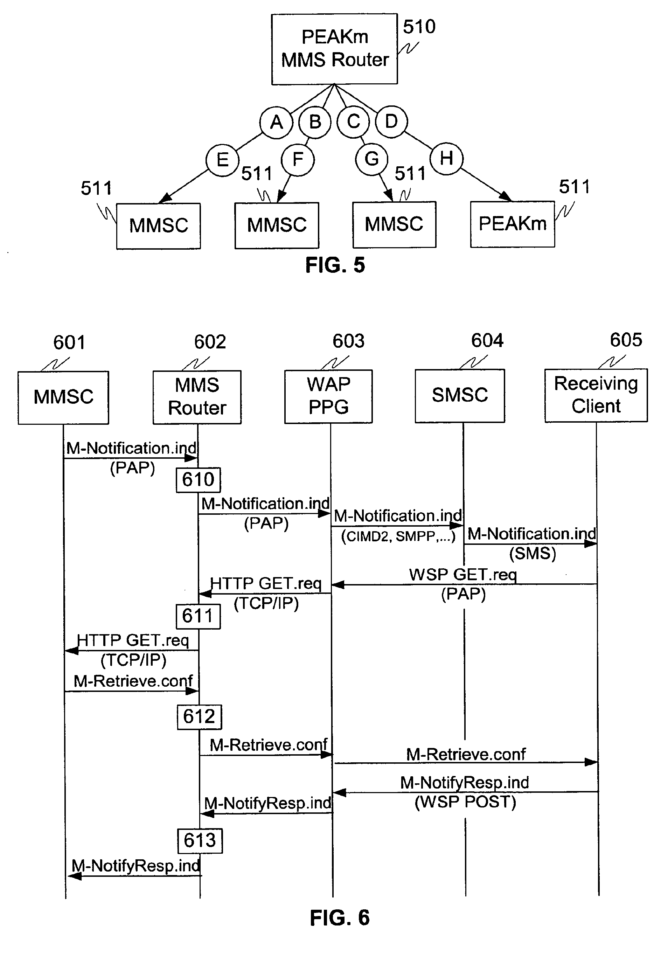

At first in step 420 the sending client 401 sends M-Send.req to the MMSC 404 URL configured in his terminal over the WAP GW 402. This URL should, however, point to the MMS router 403 according to the invention, whereupon the WAP GW 402 forwards the M-Send.req to the MMS router 403 in step 421. After receiving the M-Send.req the MMS router 403 may do load balancing in step 410 based on special static or dynamic methods described in more details in figure 5 by sending the M-Send.req to the appropriate MMSC 404 of the group of numbers of MMSC's and/or PEAKm's in step 422. The chosen MMSC 404 will compose and send M-Send.conf as a reply back to the sending client 401 in step 423 over the MMS router 403, which will act only as a transparent pipe to the message flow (step 424), and the WAP GW 402, which will forward the M-Send.conf to the sending client 401 in step 425.

After this the message communication flow between the MMSC 404 and the receiving client 401 or application (other end-point) will be carried out in step 430 and after receiving M- NotifyResp.ind message (not shown in figure 4) the MMSC 404 will send M-Delivery.ind message to the sending client 401 in step 426 over the MMS router 403, which will again act only as a transparent pipe to the message flow (step 427), and the WAP GW 402, which will forward the M-Delivery.ind to the sending client 401 in step 428.

Figure 5 illustrates a flow diagram of a routing and load balancing method between multiple MMSC's 511 by the MMS router 510 according to an advantageous embodiment of the present invention. The most commonly used load balancing method is so called round-robin algorithm, which implements the load balancing by simply routing requests to all configured end-points (such as MMSC's or PEAKM's) starting from first one (A in figure 5) and after going through all end-points (A-H in figure 5) again starts from the beginning. If one of the end-points is not available then the next one is used.

The MMS router 510 can utilise also dynamic load balancing having various methods to make the load balancing decision. For example primary and secondary end-points 511 can be defined so that if the primary end-points are not responding then the secondary ones are taken into use.

Dynamic load balancing can be also based on any other dynamic rule like time of the day or message parameter (like sender MSISDN or message size). In addition, the routing decisions can also be based for example on the response times of the MMSCs. If the response from the end-point 511 takes more time than configured then the messages can be routed to other end-points 511. Further, it should be noted, that dynamic load balancing can be used also together with static based load balancing.

Furthermore, the messages and notifications can be routed to appropriate messaging centre or other entity also based on at least one of the following: message content, message header, message destination (sender, operator, country), information on recipient (terminal capabilities, user preferences), recipient, centre availability and other information. These are mentioned by way of example and not limitation.

Figure 6 illustrates a flow diagram of an immediate delivery operation between MMSC 601 and receiving client 605 according to an advantageous embodiment of the present invention. Immediate delivery operation happens when the client's terminal is configured to retrieve the message automatically.

After receiving M-Send.req from a sending client or application (not shown in figure 6) the MMSC 601 will send M-Notification.ind message to the MMS router 602, which may modify the message URL and transactiond ID in step 610. In the M-Notification.ind received by the MMS router 602 the message URL refers to the location of the MMS message. When there are multiple MMSC's 601 in the network the message URL points to the MMSC 601 that has stored the message. Since all requests should go through the MMS router 602 the message URL has to be modified so that the message URL will point to the MMS router 602. The actual location of the MMS message is then stored to the path info of the URL address.

For example, if the original message URL is: *http:*//*mmsc_ip*/*message.id,* the MMS router 602 may modify it to a form: *http:*//*mmsrouter_ip*/*10.0.0.1*/*message.id*, for example, whereupon the modified message URL points to the MMS router 602 itself instead of the MMSC 601 or the actual location of the message. The address of the MMSC may advantageously be included into the modified message URL in order that the MMS router 602 will be able to forward the subsequent messages to the appropriate MMSC 601 later. The address of the MMSC 601 in the modified message URL may be in the numeric or alphabetic form. Further the transaction ID will be used to identify the subsequent M-NotifyResp.ind coming from the terminal if deferred retrieval occurs.

When the MMS router 602 has modified the message URL, it sends the M-Notification.ind to the WAP PPG 603, which forwards it to the receiving client 605 over the SMSC 604. In immediate delivery operation the client's 605 terminal sends WSP GET request automatically back to the MMS router 602 because the (modified) message URL points to the MMS router 602. After the MMS router 602 receives the request it has to modify the (modified) message URL to point back to the corresponding MMSC 601 and forward the request to the MMSC 601 in step 611. In case of deferred retrieval also the transaction ID will be modified.

When receiving the request the MMSC 601 may insert a new transaction ID into the M-Retrieve.conf and send the message to the terminal via the MMS router 602. The MMS router has to modify the transaction ID in step 612 so that it includes the information of the corresponding MMSC 601. For example, if the original transaction ID is: *uniqueid123,* the MMS router 602 may modify it to a form: *10.0.0.1:uniqueid123,* for example. Alternatively the MMS router 602 may modify the original transaction ID *(uniqueid123)* to another form, such as: *mmscid:uniqueid123,* for example.

After modifying operation the MMS router 602 communicates the M-Retrieve.conf to the receiving client 605 over the WAP PPG 603 and SMSC 604. When the client's 605 terminal receives the messages correctly, it will insert the transaction ID that it received in the M-Retrieve.conf into the M-NotifyResp.ind (delivery notification) and send the M-NotifyResp.ind to the MMS router 602 because the modified transaction ID.

When receiving the M-NotifyResp.ind in step 613 the MMS router 602 may modify the request URL to point to the corresponding MMSC 601. For example, if the transaction ID in the M-NotifyResp.ind is: *mmsc_ip:uniqueid123,* and the message URL: *mmsrouter_ip,* the MMS router 602 may modify the transaction ID to a form: *uniqueid123,* and the message URL to a form: *mmsc_ip,* for example. Alternatively the MMS router 602 may modify the transaction ID *(mmsc_ip:uniqueid123)* to another form, such as: *uniqueid123,* for example. According to the present invention the correct address of the appropriate MMSC 601 is advantageously identified based on the information located inside the transaction ID of the M-NotifyResp.ind message.

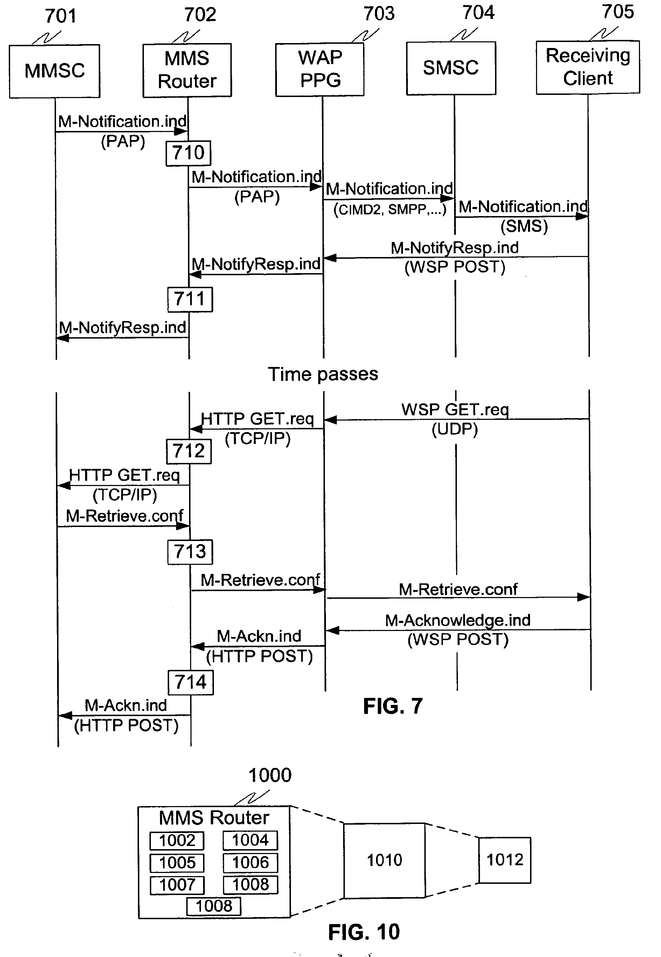

Figure 7 illustrates a flow diagram of a delayed delivery operation between MMSC 701 and receiving client 705 according to an advantageous embodiment of the present invention. Delayed delivery operation happens when the client's 705 terminal is not configured to retrieve the message automatically and/or the client 705 does not want to retrieve the message immediately.

After receiving M-Send.req from a sending client or application (not shown in figure 7) the MMSC 701 will send M-Notification.ind message to the MMS router 702, which may modify the message URL and transactiond ID in step 710. In the M-Notification.ind received by the MMS router 702 the message URL refers to the location of the MMS message. When there are multiple MMSC's 701 in the network the message URL points to the MMSC 701 that has stored the message. Since all requests should go through the MMS router 702 the message URL has to be modified so that the message URL will point to the MMS router 702. The actual location of the MMS message may be then stored to the path info of the URL address.

For example, if the original message URL is: *http:*//*mmsc_ip*/*message.id*, the MMS router 702 may modify it to a form: *http:*//*mmsrouter_ip*/*10.0.0.1*/*message.id,* for example, whereupon the modified message URL points to the MMS router 702 itself instead of the MMSC 701 or the actual location of the message. The address of the MMSC may advantageously be included into the modified message URL in order that the MMS router will be able to forward the subsequent messages to the appropriate MMSC later. The address of the MMSC 701 in the modified message URL may be in the numeric form, for example, such as 10.0.0.1. Further the transaction ID will be used to identify the subsequent M-NotifyResp.ind coming from the terminal if deferred retrieval occurs.

When the MMS router 702 has modified the message URL, it communicates the M-Notification.ind to the WAP PPG 703, which forwards it to the receiving client 705 over the SMSC 704. In delayed delivery operation the client's 605 terminal does not send WSP GET request automatically, but it sends M-NotifyResp.ind. M-NotifyResp.ind is sent to the MMS router 702 because the (modified) message URL points to the MMS router 702. After the MMS router 702 receives the request it has to modify the (modified) message URL to point back to the corresponding MMSC 701 and forward the request to the MMSC 701 in step 711. In case of deferred retrieval also the transaction ID will be modified.

Time may pass before the client 705 wants to retrieve the message and send WSP GET request. The client's terminal tries to retrieve the message from the MMS router 702 because of the message URL modification done in step 710. When the request is received the MMS router 702 has to return the original URL back and forward the request to the corresponding MMSC 701 in step 712. For example, if the modified transaction ID (which the MMS router received from the client's terminal) is: *hffp:*//*mmsrouter_ip*/*10.0.0.1*/*message_id,* the MMS router 702 has to modify it to a form: *http:*//*mmsc_ip*/*message_id,* which is the original message URL received by MMS router in the M-Notification.ind from the MMSC 701 at first.

After receiving the request the MMSC 701 inserts a new transaction ID into the M-Retrieve.conf and sends the message to the receiving client 705 via the MMS router 702. Now, in step 713, the MMS router 702 may modify the transaction ID so that it includes the information of the corresponding MMSC 701. For example, if the original transaction ID is: *uniqueid123,* the MMS router 702 may modify it to a form: *10.0.0.1:uniqueid123,* for example. Alternatively the MMS router 702 may modify the original transaction ID *(uniqueid123)* to another form, such as: *mmscid:uniqueid123,* for example.

After modifying operation the MMS router 702 communicates the M-Retrieve.conf to the receiving client 705 over the WAP PPG 703 and SMSC 704. When the client's 705 terminal receives the messages correctly, it will insert the transaction ID that it received in the M-Retrieve.conf into the M-Acknowledge.ind and send the M-Acknowledge.ind to the MMS router 702 because the modified transaction ID.

When receiving the M-Acknowledge.ind in step 714 the MMS router 702 may modify the request URL to point to the corresponding MMSC 701. For example, if the transaction ID in the M-Acknowledge.ind is: *mmsc_ip:uniqueid123,* and the message URL *mmsrouter_ip,* the MMS router 702 may modify the transaction ID to a form: *uniqueid123,* which is the original transaction ID received by MMS router in the M-Retrieve.conf from the MMSC 701 and the message URL to a form: *mmsc_ip,* for example. Alternatively the MMS router 702 may modify the transaction ID *(mmscid:uniqueid123)* to another form, such as: *uniqueid123,* for example. According to the present invention the correct address of the appropriate MMSC 701 is advantageously identified based on the information located inside the transaction ID of the M-Acknowledge.ind message.

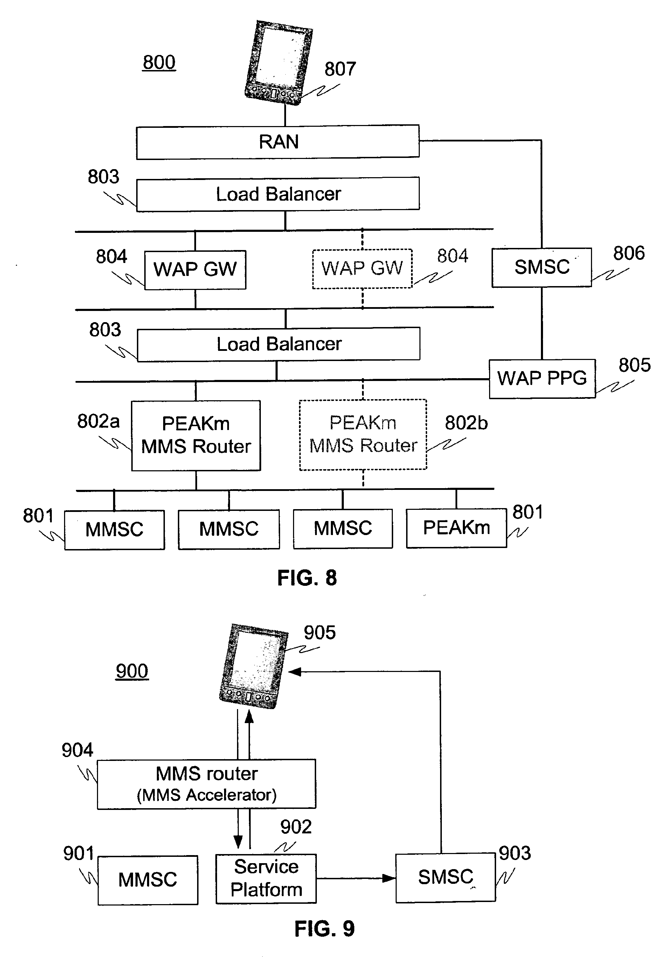

Figure 8 illustrates an exemplary arrangement 800 where the present invention can be applied according to an advantageous embodiment of the present invention in order to providing fault tolerant, powerful and flexible service. The architecture described in figure 8 can support multiple independent instances so that in a case of a failure other instances can still handle the MMS message communication traffic without interruptions.

The arrangement 800 may comprise numbers of components 801, such as MMSC and similar components (like PEAKm) that are capable of storing and delivering functionality of MMS messages. In addition the arrangement 800 may comprise at least one MMS router 802a and 802b for routing and balancing the MMS communication traffic in the network between the end-points 801 and 803-807. According to the invention MMS routers 802a/802b can be added or removed in the arrangement and there can be a MMS router even in reserve (802b). In most advantageous embodiment of the invention the MMS routers may operate as a black box and the other components in the network doesn't notice the operation of the MMS routers at all. There can also be numbers of WAP GW components 804 in the arrangement. Alternatively the invention may also be implemented without any components and functionalities of WAP GW, whereupon HTTP is only used.

It should be noted, that the routing method according to the invention may be implemented also by a database solution, where a MMS router will perform some database operations to a database, such as listing different addresses and transaction IDs when acting as a router and communicating the messages and notifications, whereupon in routing operation the appropriate addresses and other necessary information relating to routing would be retrieved from the database. This solution based on databases, however, would be quite vulnerable to hardware and/or software failures and thus the routing is implemented in the invention by including the routing information into the notification messages delivered between the parties or end-points.

Figure 9 illustrates another exemplary arrangement 900 for network architecture and message communication flow according to an advantageous embodiment of the present invention. In most convenient and simplified arrangement 900 there are only the most necessary components left in order to achieve reliable, effective and fast system. The arrangement 900 may comprise only MMSC 901, service platform 902, SMSC 903 and MMS router 904 (or MMS accelerator) components, where MMS router 904 comprises some essential functionality of WAP PPG and WAP GW components, such as functionality for sending the WAP push notifications via SMSC to end-user, and functionality for encoding and decoding WAP requests. It should be noted that the functionality or component of WAP GW may be needless and the communication between the terminal 905 and MMS router 904 may be implemented directly over HTTP protocol.

Figure 10 illustrates an exemplary MMS router 1000 according to an advantageous embodiment of the present invention comprising means 1002 for receiving messages from other end-points and means 1004 for sending messages to other end-points. The MMS router 1000 of the invention may also comprise means 1005 for make some conclusion of an appropriate end-point, to which the MMS message and/or notification message has to be communicated based on the information of the communication relating to the current MMS messaging.

Further the MMS router 1000 of the invention may comprise means 1006 for modifying any information in the communication in order to suit better for routing purposes, such as means 1007 for modifying the message ID, for example, by combining an identifier of appropriate MMSC (or identifier of any other appropriate component) into the message ID and communicate the modified message ID to the appropriate end-point. Modified information may comprise advantageously at least address information or virtual address information and identity information of the MMS message to be delivered from the initiator end-point to the responder end-point. Especially the MMS router may modify message URL addresses and transaction IDs.

Furthermore the MMS router 1000 may comprise also means 1008 for performing some essential functionality of typical WAP PPG and means 1009 for WAP GW components, such as functionality for sending the WAP push notifications via SMSC to end-point, and functionality for encoding and decoding WAP requests, but the means 1008 and/or 1009 is, however, optional.

It should be noted, that the means (1000-1009) for functionalities mentioned above may advantageously be implemented by a software product 1010, which could again be stored into a computer readable storage medium 1012. Especially, the software product 1010 may comprise code components that (not shown in figure 10), when loaded into a computer and executed, will cause the computer to operate according to the method discussed in more detail above in connection with figures 3-9.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims. For example, it should be noted that MMS routing could be implemented also using HTTP protocol without WAP GW functionality or component, for example.

Especially it should be noted that according to the present invention any information in the communication may be used for routing purposes without doing any modification. Appropriate modification may be done if necessary or otherwise required, for example, by modifying any information in the communication in order to suit the information in the communication better for routing purposes in the view of the present invention. According to the invention some conclusion of an appropriate end-point, to which the MMS message and/or notification message has to be delivered may be made based on the original information of the communication relating to the current MMS messaging situation.

## Claims

1. A method for multimedia messaging routing between an initiator end-point (10, 401, 601, 701) and a responder end-point (305, 404, 605, 705), wherein when communicating a multimedia message (MMS message) via an interface means, where the interface means locates between the initiator and responder end-points, communication information relating to the MMS message and/or notification message is communicated to the interface means from the initiator (10, 401, 601, 701) or responder end-point (305, 404, 605, 705), **characterized in that** said interface means is a MMS router (300, 403, 510, 602, 702, 802a, 802b, 904), and the method further comprises the following steps:
- said communication information is modified in order to suit for routing purposes and corresponding to a current situation whether the communication information is to be communicated to the initiator (10, 401, 601, 701) or responder end-point (305, 404, 605, 705) from the interface means (300, 403, 510, 602, 702, 802a, 802b, 904) in a such way that the modifying operation further comprises at least one of the following steps:
- modifying a message ID in the communication information to include an identifier of an appropriate MMSC (301, 404, 511, 601, 701, 801, 901), where the MMS message to be delivered is stored,
- modifying a notification message URL to point to the interface means, when the notification message is to be delivered from the initiator end-point to the responder end-point,
- modifying a notification message URL to point to the initiator end-point, when the notification message is to be delivered from the responder end-point to the initiator end-point,
- modifying a transaction ID to comprise address information of the corresponding initiator end-point, when the message is to be delivered from the initiator end-point to the responder end-point,
- modifying a transaction ID to comprise address information of the interface means, when the message is to be delivered from the initiator end-point to the responder end-point, and
- modifying a delivery notification message URL to point to the interface means, when the notification message is to be delivered from the responder end-point to the initiator end-point,
- and communicating the modified communication information to the appropriate end-point (10, 401, 601, 701, 305, 404, 605, 705).

2. A method according to claim 1, wherein information of the actual location of the MMS message is included into the notification message URL, when the notification message is to be delivered from the initiator end-point (10, 401, 601, 701) to the responder end-point (305, 404, 605, 705) and the notification message URL is modified to point to the interface means (300, 403, 510, 602, 702, 802a, 802b, 904).

3. A method according to claim 1, wherein the address to which the notification message URL is modified to point when the notification message is delivered from the responder end-point (305, 404, 605, 705) to the interface means (300, 403, 510, 602, 702, 802a, 802b, 904) is identified based on the information located inside the notification (transaction ID or modified notification message URL) modified in earlier step by the interface means.

4. A method according to claim 1, wherein the transaction ID is modified to identify the subsequent notification (M-NotifyResp.ind) coming from the responder end-point (305, 404, 605, 705), when deferred retrieval occurs.

5. A method according to claim 1, wherein the initiator end-point (301, 401, 601, 701) and the responder end-point (305, 404, 605, 705) is one of the following: end-point for delivering and storing MMS messages, such as MMSC, sending client, sending application, receiving client and SMSC.

6. A method according to claim 1, wherein the method further comprises the step of choosing an appropriate end-point between numbers of MMSC end-points (301, 404, 511, 601, 701, 801, 901) to which the MMS message is delivered for storing before the final delivering of the MMS message to the responder end-point (305, 404, 605, 705), where the choosing of an end-point is carried out either using a load balancing algorithm, where requests for delivering and storing the MMS messages is routed to all configured MMSC end-points (511) starting from first one and after going through all MMSC end-points starting again from the beginning.

7. A method according to claim 1 or 6, wherein the method further comprises the step of choosing an appropriate end-point between numbers of MMSC end-points (301, 404, 511, 601, 701, 801, 901) to which the MMS message is delivered for storing before the final delivering of the MMS message to the responder end-point (305, 404, 605, 705), where the choosing of end-point is carried out using dynamic load balancing at least in one of the following way:
- primary and secondary MMSC (511) is defined and if the primary MMSC end-points are not responding then the secondary MMSC end-points are taken into use,
- the appropriate MMSC end-point is chosen based on the response time of the MMSC end-points so that if the response time from one MMSC end-point takes more time than configured then another MMSC end-point is used, and/or
- the appropriate MMSC end-point is chosen based on at least one of the following: time of the day, parameter of the MMS message to be delivered, message content, message header, message destination, information on recipient, recipient and centre availability.

8. A method according to claim 1, wherein the communication information relates to the notification message being a MMS message request or delivery notification message, such as M-Send.req, M-Send.conf, M-Notification.ind, M-NotifyResp.ind, M-Retrieve.conf, M-Acknowledge.ind and M-Delivery.ind message.

9. An arrangement (800, 900) for multimedia messaging routing between an initiator end-point (10, 401, 601, 701) and a responder end-point (305, 404, 605, 705), wherein when a multimedia message (MMS message) is being communicated via an interface means, where the interface means locates between the initiator and responder end-points, communication information relating to the MMS message and/or notification message is adapted to being communicated to the interface means from the initiator (10, 401, 601, 701) or responder end-point (305, 404, 605, 705), **characterized in that** said interface means is a MMS router (300, 403, 510, 602, 702, 802a, 802b, 904), and the arrangement is further:
- adapted to modify said communication information in order to suit for routing purposes and corresponding to a current situation whether the communication information is to be communicated to the initiator (10, 401, 601, 701) or responder end-point (305, 404, 605, 705) from the interface means (300, 403, 510, 602, 702, 802a, 802b, 904) in a such way that the arrangement is further adapted to carry out at least one of the following steps:
- adapted to modify a message ID in the communication information to include an identifier of an appropriate MMSC (301, 404, 511, 601, 701, 801, 901), where the MMS message to be delivered is stored,
- adapted to modify a notification message URL to point to the interface means, when the notification message is to be delivered from the initiator end-point to the responder end-point,
- adapted to modify a notification message URL to point to the initiator end-point, when the notification message is to be delivered from the responder end-point to the initiator end-point,
- adapted to modify a transaction ID to comprise address information of the corresponding initiator end-point, when the message is to be delivered from the initiator end-point to the responder end-point,
- adapted to modify a transaction ID to comprise address information of the interface means, when the message is to be delivered from the initiator end-point to the responder end-point, and
- adapted to modify a delivery notification message URL to point to the interface means, when the notification message is to be delivered from the responder end-point to the initiator end-point,
- and adapted to communicate the modified communication information to the appropriate end-point (10, 401, 601, 701, 305, 404, 605, 705).

10. An arrangement according to claim 9, wherein the arrangement is further adapted to include information of the actual location of the MMS message into the notification message URL, when the notification message is to be delivered from the initiator end-point (10, 401, 601, 701) to the responder end-point (305, 404, 605, 705) and also adapted to modify the notification message URL to point to the interface means (300, 403, 510, 602, 702, 802a, 802b, 904)

11. An arrangement according to claim 10, wherein the arrangement is adapted to identify the address to which the notification message URL is modified to point when the notification message is delivered from the responder end-point (305, 404, 605, 705) to the interface means (300, 403, 510, 602, 702, 802a, 802b, 904) based on the information located inside the notification (transaction ID or modified notification message URL) modified in earlier step by the interface means.

12. An arrangement according to claim 10, wherein the arrangement is adapted to modify the transaction ID to identify the subsequent notification (M-NotifyResp.ind) coming from the responder end-point (305, 404, 605, 705), when deferred retrieval occurs.

13. An arrangement according to claim 9, wherein the initiator end-point (10, 401, 601, 701) and the responder end-point (305, 404, 605, 705) is one of the following: end-point for delivering and storing MMS messages, such as MMSC, sending client, sending application, receiving client and SMSC.

14. An arrangement according to claim 9, wherein the arrangement is further adapted to choose an appropriate end-point between numbers of MMSC end-points (301, 404, 511, 601, 701, 801, 901) to which the MMS message is delivered for storing before the final delivering of the MMS message to the responder end-point (305, 404, 605, 705), where the choosing of an end-point is adapted to being carried out either using a load balancing algorithm, where requests for delivering and storing the MMS messages is routed to all configured MMSC end-points (511) starting from first one and after going through all MMSC end-points starting again from the beginning.

15. An arrangement according to claim 9 or 14, wherein the arrangement is further adapted to choose an appropriate end-point between numbers of MMSC end-points (301, 404, 511, 601, 701, 801, 901) to which the MMS message is delivered for storing before the final delivering of the MMS message to the responder end-point (305, 404, 605, 705), where the arrangement is adapted to choose the end-point using dynamic load balancing at least in one of the following way:
- adapted to define a primary and secondary MMSC (511) and if the primary MMSC end-points are not responding then the secondary MMSC end-points are taken into use,
- adapted to choose the appropriate MMSC end-point based on the response time of the MMSC end-points so that if the response time from one MMSC end-point takes more time than configured then another MMSC end-point is used, and/or
- adapted to choose the appropriate MMSC end-point based on at least one of the following: time of the day, parameter of the MMS message to be delivered, message content, message header, message destination, information on recipient, recipient and centre availability.

16. An arrangement according to claim 9, wherein the communication information relates to the notification message being a MMS message request or delivery notification message, such as M-Send.req, M-Send.conf, M-Notification.ind, M-NotifyResp.ind, M-Retrieve.conf, M-Acknowledge.ind and M-Delivery.ind message.

17. An arrangement according to claim 9, wherein the arrangement is further adapted to carry out the following functionalities: sending WAP Push notifications via SMSC to end-point, and encoding and decoding WAP requests.

18. A multimedia messaging router (MMS router 300, 403, 510, 602, 702, 802a, 802b, 904) for multimedia messaging routing between an initiator end-point (301, 401, 601, 701) and a responder end-point (305, 404, 605, 705), **characterized in that** communication information relating to the MMS message and/or notification message is adapted to being communicated to the MMS router from the initiator (10, 401, 601, 701) or responder end-point (305, 404, 605, 705), and the MMS router is further:
- adapted to modify said communication information in order to suit for routing purposes and corresponding to a current situation whether the communication information is to be communicated to the initiator (10, 401, 601, 701) or responder end-point (305, 404, 605, 705) from the MMS router (300, 403, 510, 602, 702, 802a, 802b, 904) in a such way that the MMS router is further adapted to carry out at least one of the following steps:
- adapted to modify a message ID in the communication information to include an identifier of an appropriate MMSC (301, 404, 511, 601, 701, 801, 901), where the MMS message to be delivered is stored,
- adapted to modify a notification message URL to point to the MMS router, when the notification message is to be delivered from the initiator end-point to the responder end-point,
- adapted to modify a notification message URL to point to the initiator end-point, when the notification message is to be delivered from the responder end-point to the initiator end-point,
- adapted to modify a transaction ID to comprise address information of the corresponding initiator end-point, when the message is to be delivered from the initiator end-point to the responder end-point,
- adapted to modify a transaction ID to comprise address information of the MMS router, when the message is to be delivered from the initiator end-point to the responder end-point, and
- adapted to modify a delivery notification message URL to point to the MMS router, when the notification message is to be delivered from the responder end-point to the initiator end-point,
- and adapted to communicate the modified communication information to the appropriate end-point (10, 401, 601, 701, 305, 404, 605, 705).

19. A multimedia messaging router according to claim 18, wherein the MMS router is further adapted to include information of the actual location of the MMS message into the notification message URL, when the notification message is to be delivered from the initiator end-point (10, 401, 601, 701 ) to the responder end-point (305, 404, 605, 705) and also adapted to modify the notification message URL to point to the MMS router (300, 403, 510, 602, 702, 802a, 802b, 904).

20. A multimedia messaging router according to claim 18, wherein the initiator end-point (10, 401, 601, 701) and the responder end-point (305, 404, 605, 705) is one of the following: end-point for delivering and storing MMS messages, such as MMSC, sending client, sending application, receiving client and SMSC.

21. A multimedia messaging router according to claim 18, wherein the multimedia messaging router is further adapted to choose an appropriate end-point between numbers of MMSC end-points (301, 404, 511, 601, 701, 801, 901) to which the MMS message is delivered for storing before the final delivering of the MMS message to the responder end-point (305, 404, 605, 705), where the choosing of an end-point is adapted to being carried out either using a load balancing algorithm, where requests for delivering and storing the MMS messages is routed to all configured MMSC end-points (511) starting from first one and after going through all MMSC end-points starting again from the beginning.

22. A multimedia messaging router according to claim 18 or 21, wherein the MMS router is further adapted to choose an appropriate end-point between numbers of MMSC end-points (301, 404, 511, 601, 701, 801, 901) to which the MMS message is delivered for storing before the final delivering of the MMS message to the responder end-point (305, 404, 605, 705), where the MMS router is adapted to choose the end-point using dynamic load balancing at least in one of the following way:
- adapted to define a primary and secondary MMSC (511) and if the primary MMSC end-points are not responding then the secondary MMSC end-points are taken into use,
- adapted to choose the appropriate MMSC end-point based on the response time of the MMSC end-points so that if the response time from one MMSC end-point takes more time than configured then another MMSC end-point is used, and/or
- adapted to choose the appropriate MMSC end-point based on at least one of the following: time of the day, parameter of the MMS message to be delivered, message content, message header, message destination, information on recipient, recipient and centre availability.

23. A multimedia messaging router according to claim 18, wherein the communication information relates to the notification message being a MMS message request or delivery notification message, such as M-Send.req, M-Send.conf, M-Notification.ind, M-NotifyResp.ind, M-Retrieve.conf, M-Acknowledge.ind and M-Delivery.ind message.

24. A multimedia messaging router according to claim 18, wherein the MMS router is further arranged (1008, 1009) to carry out the following functionalities: sending WAP Push notifications via SMSC to end-point, and encoding and decoding WAP requests.

25. A software product (1010), **characterized in that** the software product (1010) comprises code components that, when loaded into a computer and executed, are adapted to cause the computer to operate according to the method of any of the preceding method claims.

26. A computer readable storage medium (1012), **characterized in that** the computer readable storage medium (1012) comprises a software product (1010) according to claim 25.
